# EUROPEAN PATENT SPECIFICATION

(11) **EP 0 679 268 B1**
(45) Date of publication and mention of the grant of the patent: **14.04.1999**
(21) Application number: 93905690.9
(22) Date of filing: 18.01.1993
(51) Int. Cl.: G05D 23/19, F24C 7/04

(54) **METHOD OF OBTAINING SAVING OF ENERGY AND APPARATUS FOR UTILIZATION IN SAID METHOD**
ENERGIEEINSPARUNGSVERFAHREN UND VORRICHTUNG ZU DESSEN ANWENDUNG
PROCEDE POUR REALISER DES ECONOMIES D'ENERGIE ET APPAREIL DE MISE EN UVRE DE CE PROCEDE

(43) Date of publication of application: 02.11.1995
(73) Proprietor: NILBORN, Jan, S-211 47 Malmö (SE)
(72) Inventor: NILBORN, Jan, S-211 47 Malmö (SE)
(74) Representative: Arwidi, Bengt Dr.
(86) International application number: PCT/SE93/00018
(87) International publication number: WO 94/16370

(56) References cited:
- DE-A- 3 208 428
- FR-A- 2 620 801
- US-A- 1 488 483
- US-A- 1 697 607
- US-A- 2 165 970
- US-A- 4 031 353
- US-A- 4 990 747
- PATENT ABSTRACTS OF JAPAN, Vol. 11, No. 146, M-587; & JP,A,61 280 321 (MITSUBISHI ELECTRIC CORP.), 10 December 1986 (10.12.86).
- DERWENT'S ABSTRACT, No. 86- 99026/15, week 8615; & SU,A,1179295 (BELO AGRIC MECHN IN), 15 Sept 1985 (15.09.85).

## Description

This invention relates to a method of energy saving in heating of premises in which people stay during part(s) of a twenty-four hours period. The invention also relates to a heat transmitting apparatus intended to be used in said method.

In temperated and cold zones there resides during part of the year, the heating season, a demand for heating dwellings, offices and the like to a temperature level which make them comfortable to people.

Presently utilized heating systems for dwellings, offices and the like are essentially based on convection. Radiators warm the indoor air which in its turn warms people.

The norms which govern the construction of these heating systems are traditionally theoretically based on the condition of an ideal room in which the average temperature in its enclosing surfaces and in the air is in balance.
The standard calculation temperature is normally 20°C. The physiological range of comfort or well-feeling at normal indoor clothing is considered to be comprised between 18 and 23°C, depending on the constitution of the body, age and so on.

The temperature level depends on the movements of air. Therefore the standard velocity in the exchange of air is maximum 0,15 m/s. A higher level of ventilation results in a demand for increasing the air temperature to compensate the cooling e.g. of naked skin, caused by the movement of air.

When temperature balance according to the above has been attained, the temperature level in floors, walls and ceilings is increased. This circumstance leads to loss of energy to the environs on account of transmission. Also the necessary ventilation means loss of energy. Both of these losses, which have to be compensated for maintenance of the comfort level, can be considered to be directly proportional to, and linearly dependent of the difference between the indoor temperature and the outdoor temperature.

The measures which have been taken up till now to reduce the abovementioned losses of energy, e.g. in directly heated minor houses, have since the first energy crises in the beginning of the nineteenseventies primarily been directed to improving the insulation in ceilings, walls and floors and to the introduction of double-glass and tripple-glass in windows and doors, so that the transmission resistance (k-value) is improved. Measures have also been taken to control the necessary ventilation of the building, so that not unnecessarily much heated air escapes into the surroundings.

All economically defensible measures of this type can to-day essentially be considered as taken. Further efforts may also cause permanent damage (mould etc.) to the buildings.

A secondary measure for reducing the energy consumption and/or the costs for heating in buildings directly heated by electricity is to change heating systems. One can install water carried heat, where the water in the system is heated, e.g. in a heat pump or an electric heating boiler or in a hot-air-system, in which indoor air is heated by means of heat pumps.

Generally, however, the saving in energy costs is not in reasonable proportion to the investment, i.e. the time of write-off becomes unreasonably long. Air heat pumps also have the general drawback that they become less effective the more the outdoor temperature drops.

A third way which is also utilized is lowering of the indoor temperature. This means, however, that it is necessary to put on more clothes. In this way one can accept the lowering of the indoor temperature by a couple of degrees, e.g. from 20°C to 18°C. Further lowering of the temperature means that the indoor comfort is lost in spite of this extra dressing.

If it would be possible to control the indoor temperature in such a way, that it was lowered e.g. to 15°C when people are not staying in the house or the premises, this would be no problem for the building proper or for furnishing, flowers and the like. Unfortunately this is not possible with to-day's systems. They react or regulate too slowly. It takes too long time to restore those surfaces where people stay part of, or the whole of, a twenty-four hours period, the "stay zones", to a comfortable condition. However, it is possible to reduce the disposible space during the cold period of the year and to maintain this space on a comfortable level, while the remaining part of the space is lowered in respect of its temperature to an "economizing level".

Reducing the energy consumption in this way means, however, a sacrifice of part of the comfort since the disposible surface diminishes. On account hereof it could be said that neither this latter method of lowering the temperature affords a feasible way of saving energy in an acceptable way. The inherent slownesses in the heating system as well as in the structure of the building are the restricting factors.

A heating system for stock pen is disclosed in Derwent Abstract no. 86-99026/15 of SU-1179295, which system includes a basic underfloor heating and additional infrared radiation heating. The additional heating is only switched on when there are stock present in the pen, their presence being detected by a bridge scheme, which can be used as the stock is not allowed to move around freely.

The object of the present invention is to provide a method for energy saving in the heating of premises, which method makes it possible to maintain the temperature obtained by means of conventional heating in the premises about 5°C under a comfortable level, without the above restriction of the disposable space, at the same time as those premises where people stay part of, or the whole of, a twenty-four hours period, the "stay zones", are rendered comfortable.

The invention utilizes the slowness in heat sensitive reaction of people. People move freely within the whole space. Comfort is not experienced as going lost in spite of the fact that people leave comfortable zones and enter into zones which at their entrance have an air temperature e.g. of 15°C and accordingly are uncomfortable. These initially uncomfortable zones are very rapidly (within 5 - 12 sek) made comfortable by the aid of the means or apparatus provided by the invention. These have the technical design and function described below which ensures that the desired feeling of comfort very rapidly increases in the stay zones after that the sensors comprised in said means have reacted to people entering the zone. Within a short time after that the last man or woman has left the zone, the supply of energy from the above means ceases, and the zone becomes uncomfortable again. These zones are normally 12 - 15 m².

The method according to the invention is characterized by the features set forth in the characterizing clause of claim 1. A heat heating installation to be utilized in said method is characterized by those features which are set forth in the characterizing claus of claim 3.

Centrally above each of the surfaces (zones) where people stay part of, or the whole of, twenty-four hours periods, the stay zones, a heat radiating apparatus specially developped for the purpose is provided at the level of the ceiling. This apparatus is preferably designed in such a way, that the predetermined initial surface temperature (170 - 220°C) is attained on the heat transmitting surface facing the stay zone of the room, within few seconds after the switching on of the apparatus. Thanks to the fact that the apparatus does not have a flat design, heat energy radiates diffusely into the room. The pattern of radiation, i.e. the distribution of the heat flux in the stay zone, is uniformly distributed without dot-shaped or curtain-shaped concentrations. The heat energy supplied to the stay zone by the apparatus after its having been switched on is experienced by the people in the stay zone as an immediate increase in the temperature of their surrounding air in the order of 5°C. This experienced effect permits an initial or basic maintenance of the indoor temperature a corresponding number of degrees below a temperature normally considered as the physiological level of comfort, simultaneously as a pleasant feeling of comfort appears.

In the centre of the above apparatus a sensor is provided which reacts as soon as anybody enters the heating zone of the apparatus. The sensor actuates a control unit comprised in the apparatus. This unit starts the supply of energy to elements located in the heat transmitting surfaces. A short time after that the sensor has noticed that no human being remains in the heating zone, the control unit disconnects the supply of energy. The sensor is of the same type as is utilized in alarm systems, e.g. against burglaries, and can therefore also be utilized in a burglary alarm system which is in function when nobody is in the house.

According to the above the heat flux in the stay zone is heat radiation. Heat rays are not of corpuscluar nature but consist of electromagnetic oscillations having a wave length of about 0,8 µm - 800 µm, the energy of which is absorbed and converted to heat energy only when they impinge matter, if the matter does not reflect the radiation or lets it through. This radiation which is within the optical range is not apprehended by the human eye, but its effect is apprehended only as heat on the human skin. Neither is energy absorbed in the volume of air, through which the heat flux passes, and accordingly the air is not primarily heated by the heat flux during the time when the flux continues. Successively the air in the zone is heated secondarily due to the fact that surfaces receiving radiation give off part of the absorbed energy and that people and other heat sources and the like give off heat energy. This seondary heating replaces, among other things, completely that part of the energy content of the conventional basic heating system, which gets lost in the volume of air which is transported away through the ventilation, when the abovementioned heat flux has not yet come into existence. The secondary additional energy is transported away mainly by the ventilation system. In dependence of the magnitude of the transmission losses in relation to the above mentioned secondary additional energy, a slow increase in the air temperature can arise after a certain time. This temperature change is recorded by a control unit comprised in the apparatus. This unit is so programmed that it always aims at a comfort-physiologically correct relationship between the temperature of the indoor air and the radiation energy supplied by the apparatus. If this relationship can be attained at a lower amount of supplied energy, the supply of energy is throttled. In this way never more energy is supplied than what is necessary from a comfort-physiological point of view.

Since the same upward current of warm air as before not arises on account of the lowering of the temperature and the technics according to the invention, warm air is not accumulated at the level of the ceiling. Measurements in air conditioned chambers indicate that the temperature difference between a point of measuring located at the ceiling and another point of measuring located 1,5 m above the floor level is minimum. The descent of cold air at windows and the like also diminishes.

The reduced indoor air temperature means that the relative humidity is increased and that the whirl of dust in the stay zones diminishes. These secondary effects probably have a favourable effect on persons having sensitive respitory passages (small children, asthmatics and others). Moist migration through walls, floors and ceiling also diminishes, which should bring about favourable effects on the frame of the building.

It is also well known that working injuries arise in office job of different kinds. Typists and computer operators often get tensions in the shoulder region and in the upper regions of the back. Experiments with the described heating method alreday carried out indicate that the extra supply of heat to these regions, obtained by the method, has a favourable effect on these troubles.

Accordingly, saving of energy arises thanks to the fact that transmission losses as well as ventilation losses are reduced when the indoor temperature is generally lowered by 5°C. Heat energy is supplied to the stay zone through radiation. This radiation influences the air temperature only indirectly and to a minor extent.

The invention will be more particularly described in the following in connection with an example illustrated in the annexed drawings.

Figure 1 is a cross sectional view of a heat radiation apparatus according to the invention.

Figures 2A - 2C are cross sectional views illustrating the outer diametric shape of different embodiments of the heat radiation apparatus of Figure 1.

Figure 3 is a diagrammatic representation of a zone pattern and the power distribution of a heat radiating apparatus which for the rest is constructed in the same way as according to Figure 1.

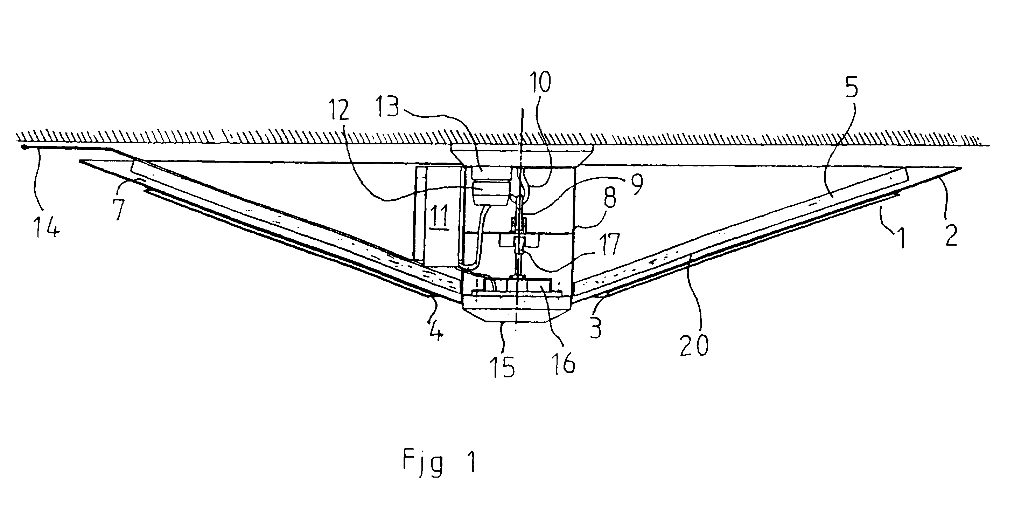

Figure 1 shows a heat radiating apparatus having an electric resistance element for producing heat radiation. In this case the element is comprised of a long wire or a band of metallic material which has been anchored in a determined form on the upper side of a supporting base or backing 1. Other possible embodiments consist in creating the abovementioned form on the supporting backing by means of printing, spraying or coating. The element may also be integrated in the supporting material or may be located between the layers of a base which is built up of several layers. The supporting base 1 has the shape of an inverted cone with a great top angle. The top of the cone is cut off, so that the base has got a centrally located opening. The supporting material does not contain more mass than what is necessary to maintain its shape when maximum power is supplied to the resistance element. The electric element has a power of 1500 W at 220 V and a current strength of 7,5 A in cold condition. During the heating the amperage and together therewith the power decreases, so that a surface temperature of 200°C is attained at a fixed setting simultaneously as the power has decreased to 1400 W and the amperage to 7 A.

The support material is secured to a conical metal screen 2. On that side of the screen which faces the element a reflector having the same extension as the support material is secured which is comprised of an aluminium-foil 3 which has a thickness of 0,05 mm. Between the support material and the foil there is an air gap 4 of 3 - 5 mm width. On the other side of the screen there is also an air gap, and above it there is a conically shaped insulation 5 which is 10 mm thick and is comprised of foamed polyuretan. That surface of the insulation which faces the screen is coated with a very thin, reflecting aluminium layer 20 which is sprayed upon said surface. The air gap 7 between the screen and the insulation is 10 mm wide.

Towards the centre, the conical metal screen is fixed to a cylinder 8 of the same material as the screen. By means of fastening means 9 designed for the purpose the cylinder and together therewith the conical screen is anchored in a hook 10 in the ceiling.

A control unit 11 is secured to the outside of the cylinder. The control unit is connected to an electric terminal 13 in the ceiling through a crown contact plug 12. The element 1 is also connected to the control unit. Above the entire apparatus a thermistor 14 is provided at the level of the ceiling. The thermistor which senses the indoor temperature of the air, is electrically connected to the control unit.

In the centre of the apparatus a sensor (IR-detector) 15 is provided, on the rear side of which a potentiometer 16 is centrally attached. The tip of the potentiometer is secured in the centre of the cylinder through a snap lock 17. The detector as well as the potentiometer are electrically connected to the control unit. One can change the setting of the potentiometer by turning the IR-detector. Different settings of the potentiometer means a change of the pre-set comfort level of the heat radiation apparatus.

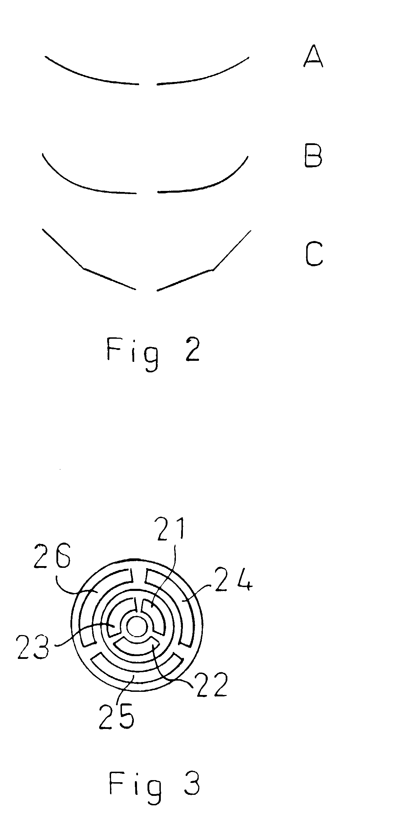

The outer shape of the apparatus is essential for the correct function of the apparatus. This shape can vary in dependence of the use in question, and examples of different outer forms are shown in Figures 2A - 2C. Common to these forms is the fact that the apparatus is not plane but deviates upwards from the horizontal plane, as seen from the centre, so that it forms a cone like the apparatus according to Figure 1 or forms a segment of a sphere (Figure 2A) or has another shape (Figures 2B and 2C). In all these case the apparatus has a centrally located opening 6 which in the first instance is intended for the mounting of the sensor.

Figure 3 shows a possible placing of the elements on a supporting base which is formed according to Figure 2C. The apparatus of Figure 3 is shown as seen from above, and the different heating zones, in which the element is sub-divided, are illustrated only diagrammatically. The supporting base 1 is also in this embodiment provided with an opening 6 for the sensor. The base is divided into two sections having different inclination with respect to the horizontal plane. In each of these sections the element is sub-divided into three zones, so that there are three heating zones 21, 22 and 23 in the central area and three further heating zones 24, 25 and 26 in the outer area. The different zones can, on one hand, be so constructed that different surface temperatures and accordingly different heat radiation is achieved from the different areas, and the apparatus can, on the other hand, be provided with a sensor which can control the elements in such a manner that only certain portions of the elements are heated.

## Claims

1. Method of reducing the energy consumption in heating a stay zone inside a premise, wherein the stay zone is heated by a basic conventional heating system and an additional heat radiation system including a heat radiation device, the operation of the additional heat radiation system being initiated by activation of a presence sensor (15), characterized in that
said basic heating system producing in said stay zone, where individuals enter and move freely at least part of a 24 hours period, a constant air temperature of approximately 5°C below a desired comfort room temperature between 18-23 °C which according to accepted standards defines physiological comfort to people,
- said presence sensor (15) upon detecting that an individual enters said stay zone initiating said additional heating system to activate the heat radiation device by energising an electric resistance heating element supported by a support base (1) having a conical or convex surface facing the stay zone to radiate heat energy uniformly and diffusely, said radiation device within few seconds bringing said surface to a temperature of 170-220 °C to rapidly give an individual in said stay zone a feeling of physiological comfort corresponding to said comfort temperature,
- said presence sensor (15) initiating shut off of the additional heat system a short time after detecting the absence of an individual in the stay zone.

2. Method according to claim 1 characterized in that a change in air temperature from said constant temperature is detected and the amount of radiation energy supplied from the heat radiation device is controlled in response thereto.

3. Heating installation reducing the energy consumption in heating a stay zone inside a premise, wherein a basic conventional heating system and an additional radiation heating system including a heat radiation device are provided to heat said stay zone and a presence sensor is provided to initiate the activation of the additional heating system characterized in that
said conventional heating system is adjusted to produce in said stay zone, where individuals enter and move freely at least part of a 24 hours period, a constant air temperature of approximately 5 °C below a desired comfort room temperature between 18-23 °C which according to accepted standards defines physiological comfort to people,
- said heat radiation device is mounted centrally over the stay zone and has a support base (1) supporting an electric resistance heating element and having a conical or convex surface facing the stay zone,
- said heat radiation device being arranged to within few seconds bring the surface of the support base (1) to a temperature of 170-220 °C to rapidly give an individual in said stay zone a feeling of physiological comfort corresponding to said comfort temperature,
- the sensor (15) is located centrally in the heat radiation device at a position where it is not directly influenced by the radiation emitted from the additional heating means.

4. Heating installation according to claim 3 characterized in that control means (11) is provided to sense a change in the air temperature from said constant temperature and to control the amount of radiating energy supplied from the heat radiation device in response thereto.

## Patentansprüche

1. Verfahren zur Reduzierung des Energieverbrauches bei der Beheizung einer Aufenthaltszone innerhalb eines Raumes, wobei die Aufenthaltszone durch ein konventionelles Basisheizsystem und ein zusätzliches Wärmestrahlungssystern, eine Wärmestrahlungsvorrichtung beinhaltend, beheizt wird, wobei der Betrieb des zusätzlichen Wärmestrahlungssystems durch Aktivierung eines Anwesenheitsfühlers (15) gestartet wird, dadurch gekennzeichnet, daß
- das genannte Basisheizsystem in der genannten Aufenthaltszone, in die Personen während mindestens eines Teils der vierundzwanzig-stündigen Zeit hineinkommen und sich frei bewegen, eine konstante Lufttemperatur von etwa 5 °C weniger als die gewünschte Behaglichkeits-Zimmertemperatur von 18 - 23 °C, die gemäß anerkannten Standards die für Personen physiologische Behaglichkeitstemperatur definiert, produziert,
- der genannte Anwesenheitsfühler (15) bei der Feststellung, daß eine Person in die genannte Aufenthaltszone hineinkommt, das genannte zusätzliche Heizsystem startet, um die Wärmestrahlungs-Vorrichtung durch Energiezufuhr zu einem elektrischen Widerstands-Heizelement zu aktivieren, das auf einer Stützbasis (1) befestigt ist und das eine der Aufenthaltszone zugewandte kegelförmige oder konvexe Oberfläche hat um Wärmeenergie gleichmäßig und gestreut auszustrahlen, wobei die genannte Strahlungsvorrichtung innerhalb weniger Sekunden die genannte Oberfläche auf eine Temperatur von 170 - 220 °C bringt um einer Person in der genannten Aufenthaltszone schnell ein der genannten Behaglichkeitstemperatur entsprechendes Gefühl von physiologischer Behaglichkeit zu geben,
- der genannte Anwesenheitsfühler (15) ein Abschalten des zusätzlichen Heizsystems eine kurze Zeit, nachdem er die Abwesenheit einer Person in der Aufenthaltszone entdeckt hat, startet.

2. Verfahren nach Anspruch 1, dadurch gekennzeichnet, daß eine Veränderung der Lufttemperatur der genannten konstanten Temperatur entdeckt, und daß die von der Wärmestrahlungs-Vorrichtung zugeführte Menge von Strahlungsenergie dementsprechend geregelt wird.

3. Heizungsinstallation zur Verminderung des Energieverbrauches beim Erwärmen einer Aufenthaltszone innerhalb eines Raumes, wobei ein konventionelles Heizsystem und ein zusätzliches Strahlungsheizsystem, eine Wärmestrahlungsvorrichtung umfassend, vorgesehen sind, um die genannte Aufenthaltszone zu erwärmen, und wobei ein Anwesenheitsfühler vorgesehen ist, um die Aktivierung des zusätzlichen Heizsystems zu starten, dadurch gekennzeichnet, daß
- das genannte konventionelle Heizsystem geregelt wird, um in der genannten Aufenthaltszone, in die Personen hineinkommen und sich während mindestens eines Teils der vierundzwanzig-stündigen Zeit frei bewegen, eine konstante Lufttemperatur von etwa 5 °C weniger als die gewünschte Behaglichkeits-Zimmertemperatur zwischen 18 und 23 °C, die gemäß anerkannten Standards die für Personen physiologische Behaglichkeitstemperatur definiert, zu produzieren,
- die genannte Wärmestrahlungs-Vorrichtung mittig oberhalb der Aufenthaltszone montiert ist und eine Stützbasis (1) hat. die ein elektrisches Widerstands-Heizelement trägt, sowie ebenfalls eine der Aufenthaltszone zugewandte kegelförmige oder konvexe Oberfläche hat.
- die genannte Strahlungsvorrichtung derart eingerichtet ist, die genannte Oberfläche der Stützbasis (1) innerhalb weniger Sekunden auf eine Temperatur von 170 - 220 °C zu bringen, um schnell einer Person in der genannten Aufenthaltszone ein der genannten Behaglichkeitstemperatur entsprechendes Gefühl von physiologischer Behaglichkeit zu geben,
- der Fühler (15) mittig in der Wärmestrahlungs-Vorrichtung in einer Lage, in der er von der durch die zusätzliche Heizvorrichtung ausgestrahlten Strahlung nicht direkt beeinflußt wird, angeordnet ist.

4. Heizungsinstallation nach Anspruch 3, dadurch gekennzeichnet, daß eine Steuer- oder Regelvorrichtung (11) zum Entdecken einer Veränderung der Lufttemperatur von der genannten konstanten Temperatur und zur entsprechenden Steuerung der der Strahlungsvorrichtung zugeführten Strahlungsenergie vorgesehen ist.

## Revendications

1. Procédé de réduction de la consommation d'énergie pour le chauffage d'une zone de vie à l'intérieur de locaux, dans lequel la zone de vie est chauffée par un système de chauffage de base classique et un système à rayonnement de chaleur supplémentaire incluant un dispositif de rayonnement de chaleur, le fonctionnement du système de rayonnement de chaleur supplémentaire étant initié par l'activation d'un capteur (15) de présence, caractérisé en ce que
le système de chauffage de base produit dans la zone de vie, où des individus entrent et se déplacent librement au moins une partie d'une période de 24 heures, une température d'air constante d'approximativement 5°C en dessous d'une température de pièce de confort souhaité comprise entre 18° et 23°C qui, conformément aux normes acceptées, définit le confort physiologique des gens,
- le capteur (15) de présence, lors de la détection du fait qu'un individu pénètre dans la zone de vie, initiant le système de chaleur supplémentaire pour activer le dispositif de rayonnement de chaleur en activant un élément chauffant en forme de résistance électrique supporté par une base (1) de support ayant une surface convexe ou conique faisant face à la zone de vie pour rayonner de l'énergie thermique de manière uniforme et diffuse, le dispositif de rayonnement amenant en quelques secondes la surface à une température de 170 à 220°C pour donner rapidement à un individu dans la zone de vie un sentiment de confort physiologique correspondant à la température de confort,
- le capteur (15) de présence initiant la fermeture du système de chaleur supplémentaire un court instant après avoir détecté l'absence d'un individu dans la zone de vie.

2. Procédé conformément à la revendication 1, caractérisé en ce qu'une variation de la température de l'air à partir d'une température constante est détectée et la quantité d'énergie de rayonnement fournie à partir du dispositif de rayonnement de chaleur est commandée en réponse à cela.

3. Installation de chaleur réduisant la consommation d'énergie dans le chauffage d'une zone de vie à l'intérieur d'un local, dans lequel un système de chauffage classique de base et un système de chauffage par rayonnement supplémentaire incluant un dispositif de rayonnement de chaleur sont prévus pour chauffer la zone de vie et un capteur de présence est prévu pour initier l'activation du système de chauffage supplémentaire, caractérisée en ce que
le système de chauffage classique est ajusté pour produire dans la zone de vie, où des individus entrent et se déplacent librement au moins une partie d'une période de 24 heures, une température d'air constante d'approximativement 5°C en dessous d'une température de pièce de confort souhaitée comprise entre 18 et 23°C qui conformément à des normes acceptées définissent le confort physiologique pour les gens,
- le dispositif de rayonnement de chaleur est monté centralement sur la zone de vie et comporte une base (1) de support supportant un élément chauffant sous forme de résistance électrique et ayant une surface convexe ou conique faisant face à la zone de vie,
- le dispositif de rayonnement de chaleur étant agencé de manière en quelques secondes, à amener la surface de la base (1) de support à une température de 170 à 220°C pour rapidement donner à un individu dans la zone de vie un sentiment de confort physiologique correspondant à la température de confort,
- le capteur (15) se trouve centralement dans le dispositif de rayonnement de chaleur en une position où il n'est pas directement influencé par le rayonnement émis des moyens de chauffage supplémentaires.

4. Installation de chauffage suivant la revendication 3, caractérisée en ce que des moyens (11) de commande sont prévus pour capter une variation de la température de l'air à partir d'une température constante et pour commander la quantité d'énergie de rayonnement fournie à partir du dispositif de rayonnement de chaleur en réponse à cela.
